# EUROPEAN PATENT SPECIFICATION

(11) **EP 0 826 127 B1**
(45) Date of publication and mention of the grant of the patent: **20.03.2002**
(21) Application number: 95920595.6
(22) Date of filing: 23.05.1995
(51) Int. Cl.: F16M 11/04, F16M 7/00

(54) **MACHINE LEVELER**
NIVELLIERGERÄT FÜR MASCHINE
DISPOSITIF DE MISE A NIVEAU POUR MACHINE

(43) Date of publication of application: 04.03.1998
(73) Proprietor: J.P. Bell & Co., Detroit, MI 48236 (US)
(72) Inventor: SCHRIEVER, Frederick, G., Grosse Pointe Shores, MI 48236 (US)
(74) Representative: Lemke, Jörg-Michael, Dipl.-Ing.
(86) International application number: US9506436
(87) International publication number: WO9637729

(56) References cited:
- FR-A- 2 090 390
- GB-A- 2 011 350
- US-A- 1 987 726
- US-A- 2 819 037
- US-A- 3 306 562
- US-A- 3 325 145
- US-A- 4 114 845
- US-A- 4 436 268
- US-A- 4 858 865
- US-A- 5 110 082

## Description

### Field of Invention

This invention relates to leveling devices and particularly to such devices for mounting and leveling heavy loads.

### Background of the Invention

Machine levelers in various forms have been sold over the years whose designs are represented by the following U.S. patents:

| | |
|---|---|
| 1,987,726 | 4,114,845 |
| 2,819,037 | 4,576,357 |
| 3,306,562 | 4,858,865 |
| 3,325,145 | 5,110,082 |

Certain improvements, however, are desirable, such as, for example, being able to weld the leveling device to steel beams in the floor of the building. Heretofore the leveling devices have had cast iron bases or housings which do not lend themselves to welding and had to be secured to the floor by screws as in U.S. Patents 1,987,726, 3,325,145 or 5,110,082, or simply grouted in place in the floor. Also, the design of the prior art levelers was such that if a customer wanted other than a standard size base, it was difficult to provide another size base without a substantially greater price. In addition, it is desirable that the leveler is able to shed water, cutting oils and scrap shavings, water and the like without allowing it to enter the leveler to cause rusting or malfunction should it be necessary in the future to re-level the load.

As to the US Patent 3 325 145 mentioned above, same teaches a leveling device for mounting and leveling heavy loads having a base plate with an upwardly facing wedge supporting surface and a cover positioned on the base plate over the wedge supporting surface with fasteners securing the cover to the base plate, and a wedge disposed under the cover and seated on said supporting surface for slidable movements, having an inclined surface with a wedge follower extending through the cover and having a load carrying surface at the upper end and an inclined surface at the lower end engaged with the wedge under the cover, and a wedge shifter for slidably moving the wedge to raise or lower the wedge follower with the wedge shifter in the form of a threaded adjustment screw which extends through a side wall and is threadedly engaged in a threaded bore in the wedge, said shifter being rotatable but secured against longitudinal movement by locking elements on the body of the shifter, said elements bearing inside and outside against the said side wall.

This known construction is complicated and rather expensive to manufacture and does not easily lend itself to modification, such as increasing the size of the housing to bridge between building trusses to which it must be fastened by screws. The base plate of this construction does not comprise a flat plate but rather a complicated casting having a special surface for guiding the movement of the wedge. Such a casting substantially increases the cost of the leveler.

A serious problem has been that in adjusting the leveler to level the load, the workmen may overtorque the adjusting screw causing it to break or strip the threads or causing the leveling wedge to break. When such occurs the load, such as a machine tool or other heavy object, must be removed, then the leveler removed and either repaired or replaced, and the load again placed thereon, and the leveling procedure re-commenced, all of which substantially increases the cost of the installation.

### Summary Of The Invention

In accordance with the invention as laid down in claim 1 the foregoing problems of the prior art and at the same time last mentioned have been overcome the cost of the leveler has been reduced.

### Description Of The Drawings

Fig. 1 is a perspective view of a leveler embodying my invention;
Fig. 2 is a cross-sectional view taken on the line 2-2 of Fig. 1;
Fig. 3 is an end view of the leveler looking in the direction of arrows 3-3 in Fig. 2;
Fig. 4 in a plan view of my improved leveler;
Fig. 5 is a side elevation of the leveler in the floor of building structure; and
Figs. 6 and 7 are cross-sectional views similar to Fig. 2 showing the wedge in different adjusted positions.

### Brief Description Of The Preferred Embodiment

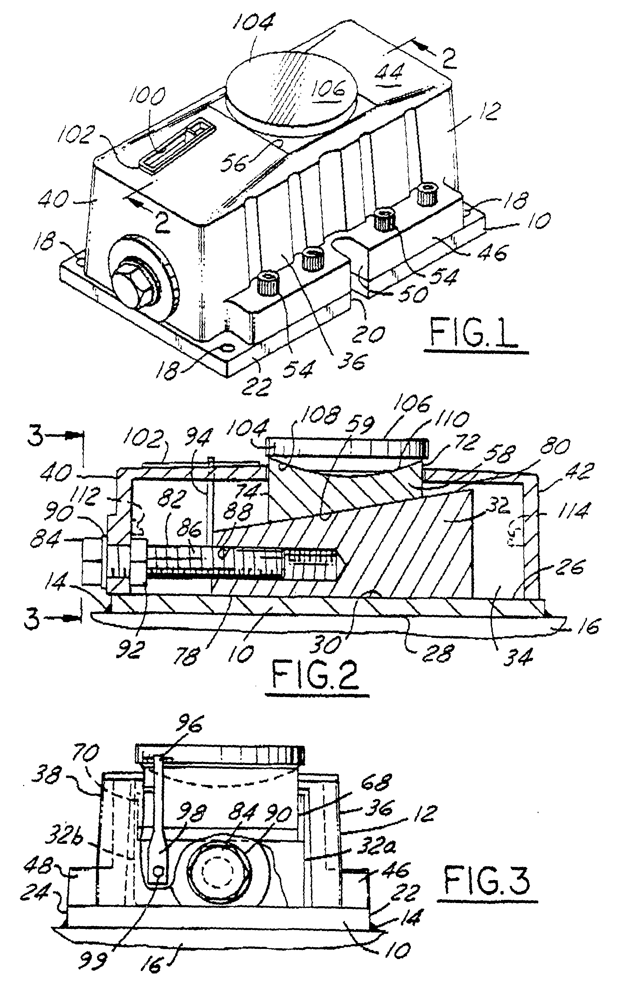

The leveler, as shown in the drawings, has a steel base plate 10 which may be of any desired size to carry the load. It is shown in the drawings as being just large enough to accommodate the cover 12, and while it should be no smaller, it can be substantially larger. The leveler design permits a customer to order the leveler with either a standard base, such as shown in Fig. 1, or any larger size base desired. Because the base is made of steel, it can be welded, as at 14, to a structural part 16 of the building in which the leveler is installed, or it can be installed with concrete anchors or other fasteners (not shown) as in the prior art. Threaded holes 18 at each of the corners of the plate, are provided for threadedly receiving therethrough levelling screws to level the base prior to grouting it in place in the concrete floor. Slots 20, one in each edge 22 and 24 are adapted to permit fasteners to be attached to the leveler to hold it down to the structure of the building. Prior art levelers are not designed to afford this flexibility in the method of installing the levelers.

The base plate 10 has an upwardly facing surface 26 and an opposite downwardly facing surface 28. The upwardly facing surface has a wedge supporting surface 30 upon which a wedge 32 is slidably seated. The wedge supporting surface may have a smoother finish than the remainder of the plate to reduce the sliding resistance of the wedge on the plate.

The cover 12 is formed of gray iron for casting purposes and is hollow as shown having an open side 34 that allows the cover to be positioned on the base plate 10 with the open side thereagainst. Thus the cover extends over the wedge 32 and wedge supporting surface 30 and other components to be later described. The cover has four integral side walls 36, 38, 40 and 42 and a top wall 44. The side walls are arranged in opposite pairs and slope outwardly as they extend downwardly. The pair of walls 36 and 38 are longer than the other pair, and terminate in heavy laterally extending integral flanges 46 and 48, each of which is interrupted by a slot 50 which aligns with the slots 20 in the base plate. Flanges 46 and 48 are also provided with a plurality of through openings to receive therethrough, cap screws or the like 54 which are threaded into the base plate for securing the cover thereto.

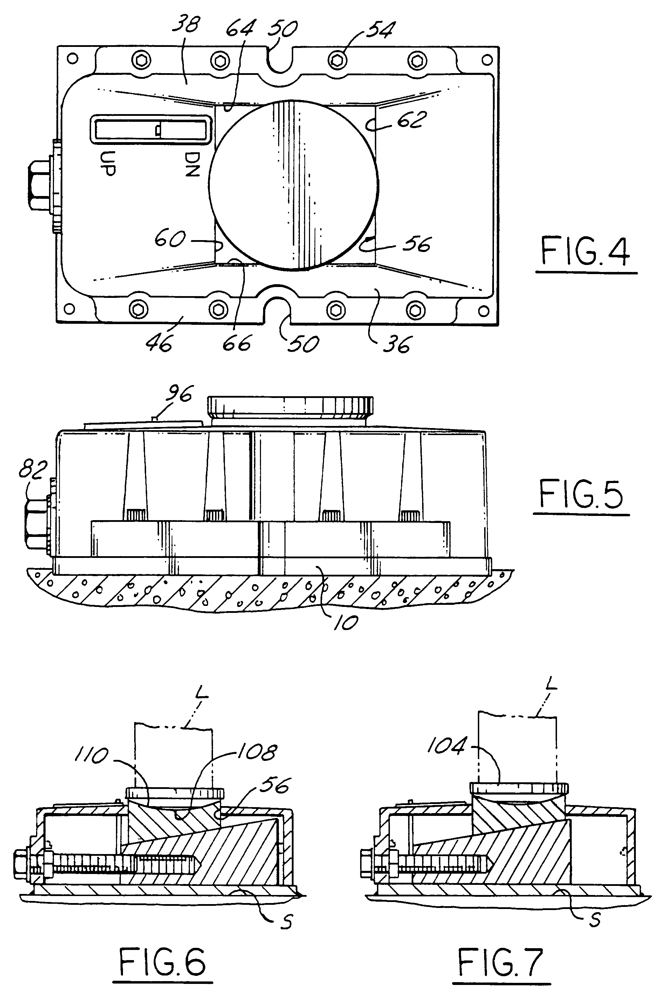

The top wall 44 has a central opening 56 therein for slidably receiving and guiding a wedge follower 58 for vertical movement through the cover. The top wall 44 slopes outwardly and downwardly from the central aperture 56 as shown in Fig. 1. The opening 56 is substantially square in plan view as shown in Fig. 4 having peripheral edges 60, 62, 64 and 66. In the embodiment depicted, the edges 60 and 62 are slightly longer than the edges 64 and 66. The wedge follower is substantially square in plan view, having sides 68, 70, 72 and 74. In embodiment depicted the sides 72 and 74 are slightly longer than the sides 68 and 70. There is slight gap, on the order of 1,5875 mm (1/16"), between the sides of the wedge follower and the adjacent peripheral edges 60, 62, 64 and 66 of the central opening 56 to allow free but guided vertical movement of the follower in the cover. Such guiding of the follower 58 insures that it maintains its proper position in relation to the leveler and the wedge 32 and prevents any appreciable lateral movement of the wedge follower 58. The wedge follower is preferably made of cast iron and has a downwardly facing inclined load bearing surface 59.

The wedge 32 is made of the same material as the cover 12 and has a downwardly facing load bearing surface 78 which slidably bears upon the wedge supporting surface 30 of the base plate 10, and an upwardly facing inclined load bearing surface 80. The surfaces 59,78 and 80 may be machined to a smooth surface to reduce the sliding friction between the wedge, base plate 10 and the wedge follower 58. The inclined load bearing surfaces 59 and 80 lie at a self-locking angle such as 10 degrees. It will be noted in Figure 3 that opposed side walls 36 and 38 of the cover 12 embrace the sides 32a and 32b of the wedge in closely spaced relation to guide the wedge for rectilinear movement during sliding of the wedge on the base 10 within the cover.

A wedge shifter in the form of a threaded adjusting screw 82 extends through the side wall 40 of the cover and has a tool engaging hexagonal head portion 84 on the outside of the cover with a long threaded body 86 threadedly engaged in a threaded bore 88 in the wedge. A thrust washer 90 encircles the body 86 between the head portion 84 and the outside of wall 40 and a jam nut 92 on the body 86 bears against the inside of wall 40. The threaded body 86 of the shifter and bore 88 are sufficiently long that upon applying a wrench (not shown) to the tool engaging head portion 84 and rotating the shifter, the wedge may be shifted between the fully raised position shown in Fig. 7 and the fully lowered position shown in Fig. 6.

To show the adjusted position of the wedge within the cover, an indicator 94 is connected to the wedge and projects out through the cover 12. In one preferred embodiment, the indicator 94 may be in the form of a finger having a narrow upper end 96 and an wider lower end 98. A small screw fastener 99 extends through the lower end portion of the finger and secures it to the wedge. The upper end extends through a slot 100 in the top of the cover. The slot is surrounded at the outer surface of the cover by a raised portion or ridge 102 which will help keep water or cutting oil that may drip on the cover out of the slot. The cover may be marked with the legends UP and DN. The indicator 94 will show the workman adjusting the leveler to level a heavy load when he is at or near the limit of travel of the wedge, thereby avoiding over torquing the wedge shifter and consequent damage to the shifter or the wedge itself.

In an alternative embodiment the wedge position indicator may comprise a pair of electric contact switches 112 and 114 shown in phantom outline in Figure 2. These are connected in an electric circuit (not shown) to a meter (not shown) that will indicate a close approach of the wedge to either wall 40 or 42.

At the upper end of the wedge follower 58 is a load carrying member in the form of a cast iron spherical washer 104. The washer has a flat upwardly facing load bearing surface 106 and a downwardly facing spherically curved load bearing surface 108 which complements a spherically curved upwardly facing spherical seat 110 in the wedge follower. This arrangement allows leveling of a load indicated in phantom at L in Figs. 6 and 7 despite a slight inclination of the surface S on which the leveler is mounted.

Thus I have shown a leveler which still utilizes cast iron or ductal iron or steel for the wedge, wedge follower, spherical washer and housing, but enables the leveler to be welded in place and permits the flexibility of varying size bases rather than being limited, as a practical matter, to one standard base. In addition the design is such that water and cutting oil are essentially excluded from the leveler, and during leveling of a heavy load the workman can easily see the location of the wedge within the leveler and thereby avoid damaging it.

## Claims

1. A leveling device for mounting and leveling heavy loads having a base plate (10) with an upwardly facing wedge supporting surface (30) and a cover (12) positioned on the base plate (10) over the wedge supporting surface (30) with a fastener (54) securing the cover (12) to the base plate (10), and a wedge (32) disposed under the cover (12) and seated on said supporting surface (30) for slidable movement, having an inclined surface (80) with a wedge follower (58) extending through the cover (12) and having a load carrying surface (106) at the upper end and an inclined surface (59) at the lower end engaged with the wedge (32) under the cover (12), and a wedge shifter (82) for slidably moving the wedge to raise or lower the wedge follower with the wedge shifter (82) in the form of a threaded adjustment screw which extends through a side wall (40) and is threadedly engaged in a threaded bore (88) in said wedge (32), said shifter being rotatable but secured against longitudinal movement by locking elements (90; 92) on the body of the shifter (82), said elements bearing inside and outside against said side wall (40),
whereby
the upwardly facing surface (30) of the base plate (10) is flat to support the wedge (32) and the cover (12) is hollow and essentially open only at one side (34) and positioned with the open side (34) against the base plate (10) covering and protecting the wedge (32) from contamination, that an indicator (94) is mounted on and carried by the wedge (32) and projects upwardly through a slot (100) in a wall (44) of the hollow cover (12) for indicating the position of the wedge (32), that the base plate (10) is made of weldable steel for welding attachment to the structure of a building within which the leveling device is to be mounted, and that the cover (12) is a casting of gray iron, with the walls (36, 38, 40) of the cover (12) embracing sides (32a, 32b) of the wedge (32) in closely spaced relation to said wedge (32) whereby the wedge (32) is guided for movement on the base plate (10) by the cover (12) within the leveling device, the side wall (40) through which the wedge shifter extends being a side wall of said cover (12).

2. A leveling device according to claim 1,
**characterized in that**
said cover (12) has portions (36, 38, 60, 62, 64, 66) for engaging both the wedge (32) and the wedge follower (80) to guide their movement during sliding of the wedge.

3. A leveling device according to claim 1,
**characterized by**
a ridge (102) upstanding from the cover (12) around said slot (100) to deflect water and the like on the cover (12) away from said slot (100).

4. A leveling device according to claim 1,
**characterized in that**
the wall (44) slopes outwardly and downwardly from the wedge follower (58).

## Patentansprüche

1. Nivelliervorrichtung zur Montage und Nivellierung von schweren Lasten mit einer Grundplatte (10), die eine nach oben weisende Keilstützfläche (30) und eine Abdeckung (12) aufweist, die über der Keilstützfläche (30) auf der Grundplatte (10) positioniert ist, wobei ein Befestigungselement (54) die Abdeckung (12) an der Grundplatte (10) festlegt, und mit einem unter der Abdeckung (12) angeordneten und auf der genannten Stützfläche (30) zur Gleitbewegung sitzenden Keil (32), welcher eine Neigungsfläche (18) mit einem Keilfolgeelement (58) besitzt, das sich durch die Abdeckung (12) hindurcherstreckt, sowie eine Lasttragefläche (106) am oberen Ende und eine Neigungsfläche (59) am unteren Ende, die am Keil (32) unter der Abdeckung (12) anliegt, und mit einem Keilschieber (82) zur Gleitbewegung des Keils zwecks Anhebens oder Absenkens des Keilfolgeelements, wobei der Keilschieber (82) in Form einer Einstell-Gewindeschraube vorliegt, die sich durch eine Seitenwand (40) hindurcherstreckt und sich in Schraubeingriff mit einer Gewindebohrung (88) in dem Keil (32) befindet, und wobei der Schieber drehbar, jedoch gegen Längsbewegung durch Verriegelungselemente (90; 92) am Körper des Schiebers (82) verriegelt ist und die genannten Elemente innen und außen gegen die Seitenwand (14) anliegen,
**bei welcher**
die aufwärtsweisende Fläche (30) der Grundplatte (10) zur Abstützung des Keils (32) flach und die Abdeckung (12) hohl und im wesentlichen offen nur an einer Seite (34) und mit der offenen Seite (34) gegen die Grundplatte (10), den Keil (32) abdeckend und gegen Verunreinigung schützend, positioniert ist, wobei auf dem Keil (32) ein Anzeiger (94) montiert und von dem Keil getragen ist und sich nach oben durch einen Schlitz (100) in einer Wand (44) der hohlen Abdeckung (12) zur Anzeige der Position des Keils (32) hindurcherstreckt, die Grundplatte (10) aus einem schweißbaren Stahl zwecks Anbringung mittels Schweißens an der Struktur eines Gebäudes, innerhalb dessen die Nivelliervorrichtung zu montieren ist, hergestellt ist, die Abdeckung (12) aus Grauguß besteht, wobei die Wände (36, 38, 40) der Abdeckung (12) die Seiten (32a, 32b) des Keils (32), am Keil (32) eng anliegend, einfassen, wodurch der Keil (32) von der Abdeckung (12) innerhalb der Nivelliervorrichtung zur Bewegung auf der Grundplatte (10) geführt ist, und die Seitenwand (40), durch die sich der Keilschieber hindurcherstreckt, eine Seitenwand der Abdeckung (12) ist.

2. Nivelliervorrichtung nach Anspruch 1, **dadurch gekennzeichnet, dass** die Abdeckung (12) Abschnitte (36, 38, 60, 62, 64, 66) zur Anlage sowohl am Keil (32) als auch am Keilfolgeelement (80) aufweist, um deren Bewegung während eines Verschiebens des Keils zu führen.

3. Nivelliervorrichtung nach Anspruch 1, **gekennzeichnet durch** einen von der Abdeckung (12) rund um den Schlitz (100) hochstehenden Rand (102), um auf der Abdeckung (12) befindliches Wasser und dergleichen von dem Schlitz (100) abzulenken.

4. Nivelliervorrichtung nach Anspruch 1, **dadurch gekennzeichnet, dass** die Wand (44), vom Keilfolgeelement (58) ausgehend, nach außen und unten geneigt ist.

## Revendications

1. Dispositif de vérin pour monter et niveler des charges lourdes, comportant un plateau de fond (10) dont la paroi supérieure (30) porte un coin, et un couvercle (12) disposé sur le plateau de fond (10) au-dessus de la paroi (30) de support du coin, une attache (54) fixant le couvercle (12) au plateau de fond (10), et un coin (32) disposé sous le couvercle (12) et reposant sur la dite paroi de support (30) pour un mouvement de coulissement, présentant une paroi inclinée (80) avec un suiveur du coin (58) traversant le couvercle (12) et ayant une paroi (106) de support de la charge à l'extrémité supérieure et une paroi inclinée (59) à l'extrémité inférieure en contact avec le coin (32) sous le couvercle (12), et un organe de commande (82) du coin pour déplacer par coulissement le coin en vue de monter ou de descendre le suiveur du coin, l'organe de commande (82) du coin affectant la forme d'une vis filetée d'ajustement qui traverse une paroi latérale (40) et engagée dans un alésage taraudé (88) pratiqué dans le dit coin (32), le dit organe de commande étant libre à rotation mais bloqué contre mouvement longitudinal par des éléments de verrouillage (90, 92) montés sur le corps de l'organe de commande (82), les dits éléments portant contre les faces intérieure et extérieure de la dite paroi latérale (40),
**dans lequel**
la paroi supérieure (30) du plateau de fond (10) est plane pour porter le coin (32), et le couvercle (12) est creux et essentiellement ouvert sur un côté (34) et positionné avec le côté ouvert (34) contre le plateau de fond (10) pour recouvrir et protéger le coin (32) de toute contamination,
un indicateur (94) est monté sur et porté par le coin (32) et fait saillie vers le haut à travers une fente (100) pratiquée dans une paroi (44) du couvercle creux (12) pour indiquer la position du coin (32),
le plateau de fond (10) est réalisée dans un acier soudable pour une fixation par soudage à la structure d'un bâtiment à l'intérieur duquel le dispositif de vérin doit être monté, et
le couvercle (12) est en fonte grise, les parois (36, 38, 40) du couvercle (12) enserrant étroitement les bords (32a, 32b) du coin (32) de façon que le coin (32) soit guidé dans son mouvement sur le plateau de fond (10) par le couvercle (12) à l'intérieur du dispositif de vérin, la paroi latérale (40) qui est traversée par l'organe de commande du coin étant une paroi latérale du dit couvercle (12).

2. Dispositif de vérin selon la revendication 1, **caractérisé en ce que** le dit couvercle (12) a des parties (36, 38, 60, 62, 64, 66) en contact à la fois avec le coin (32) et le suiveur du coin (80) pour guider leur mouvement lors du coulissement du coin.

3. Dispositif de vérin selon la revendication 1, **caractérisé par** un bourrelet (102) faisant saillie du couvercle (12) autour de la dite fente (100) pour dévier l'eau et équivalent sur le couvercle (12) hors de la dite fente (100).

4. Dispositif de vérin selon la revendication 1, **caractérisé en ce que** la paroi (44) est en pente vers l'extérieur et vers le bas à partir du suiveur du coin (58).
